# EUROPEAN PATENT APPLICATION

(11) **EP 4 018 823 A1**
(43) Date of publication of application: **29.06.2022**
(21) Application number: 20217096.5
(22) Date of filing: 23.12.2020
(51) Int. Cl.: A01K 5/02, A01K 29/00, G06Q 50/02

(54) **METHOD FOR OPTIMIZING ANIMAL FARMING BY CALCULATING INTERMEDIATE AND/OR FINAL WEIGHTS OF THE ANIMALS DURING THEIR GROWTH PERIOD BASED ON VARIOUS INPUTS**

(71) Applicant: ForFarmers Corporate Services B.V., 7241 CW Lochem (NL)
(72) Inventor: VAN WESEL, Adrianus Augustinus Maria, 7241 CW Lochem (NL); BUIJTELS, Johannes Antonius Adrianus Maria, 7241 CW Lochem (NL)
(74) Representative: EP&C

(57) **Abstract**

A method for optimizing farming of one or more groups of animals at one or more farming locations, comprises the steps of assigning individual animals at a start of their growth period to one of the groups and farming locations, sending animal-related information to a control unit, feeding the groups with amounts of respective feed compositions of specified formulae containing specific nutrient values, measuring feed intake amounts by each group, sending the feed intake amounts of the groups together with their specified formulae and specified nutrients to the control unit, calculating intermediate and/or final weights for each group by the control unit based upon at least their measured periodic feed and nutrient intake amounts of their specified formula, and generating farming instructions for each group of animals during the growth period based upon their calculated intermediate and/or final weights.

## Description

### FIELD OF THE INVENTION

The invention relates to a method and device for optimizing farming of one or more groups of animals at one or more farming locations, in particular of farm animals, like pigs or poultry.

### BACKGROUND TO THE INVENTION

In animal farming there is a growing need for development towards a more precise, technology driven operation. Better precision in feeding, farm and health management, and climate control is becoming more and more important to grow animals in a sustainable and profitable way. From the state of the art various methods and systems are already known.

For example US 2006/0041408 describes an animal production system that is specifically designed for generating an optimized animal feed formula that can be based on an impressive large number of animal requirements. For this use is made of a so-called simulator engine and formulator engine. The simulator engine is designed to receive several animal-related information data as input and to then generate several animal-related requirements data as output. The generator engine is designed to receive those several animal-related requirements data as input and to then generate an animal feed formula for obtaining pre-determined goals with the animals as output.

It is possible to, as a further optimization step, subsequently submit the feed formula as generated by the formulator engine back to the simulator engine again. The simulator engine then can be designed to generate a so-called performance projection during which an optimization of variable ones of the animal-related information data can take place.

With this the several animal-related information data may comprise all kinds of values that can be determined or estimated by a farmer, like sizes, heights, lengths, circumferences, body mass indexes, weights according to expected/targeted growth curves, survival rates, health statuses, stress levels, etc. The variable ones of the animal-related information data may comprise all kinds of values that can be influenced by the farmer, like stable temperature and humidity, light intensity, feeding amounts, feeding schemes, medication, etc.

The aim of this US 2006/0041408 is to have the farmer prepare specific customized animal feed compositions out of various distinctive feed components each with their own specified nutrient values and fully in accordance with the generated feed formula. For example for farm animals, like pigs or poultry, the main aim for which the feed formula is generated, then can be to have the farmer feed the animals with as cost-efficient as possible feed compositions that make maximum growth rates of the animals in shortest amounts of time possible while having minimum loss of lives of the animals.

However, the functioning of this known system leaves to be desired. A particular disadvantage of this known system is that its weight determination is inaccurate and/or difficult. If weight is not estimated accurately, precision feeding is limited both in feed composition as well as in feed transition moments in case of phase feeding which is common practice. This results in either a sub optimal performance of animals or a waste of nutrients. In the case of said farm animals, like pigs or poultry, everything is focussed on the generation of least cost feed with just enough nutrients to let the animals grow as quickly as possible in order to have them ready for slaughtering.. Further it is noted that the known system is not accurate in weight estimation and the only method for accurate weight input would be weighing the animals on a regular base which is laborious for the farmer and stress full for the animals. Automatic systems using scales or camera systems are expensive and thus often only used on subset of pens. For other situations the farmer needs to determine and estimate lots of animal-related information data and then needs to manually input those data via a user terminal into the system.

Further it is disadvantageous that a number of those animal-related information data are merely rough estimations. This might well lead to all kinds of inaccuracies leading to a feed formula with which the aimed pre-determined goal cannot be fully obtained. For example the abovementioned inaccurate weight estimations of the increasing weights of the animals during their growth period are mostly either only a rough estimated input based upon merely a visual observation of the animals by the farmer, either only a rough assumed input based upon merely an expected/targeted growth curve for the animals. As indicated above, a periodic manual individual weighing of all the animals by the farmer does not seem practicable because it would require expensive heavy equipment, and would be difficult for the farmer to each time get the individual animals separated from their groups and willing to get weighed. Also this would lead to unnecessary high stress levels for the animals with negative impact on their health and well-being.

Furthermore it is disadvantageous that the preparation of the feed compositions in accordance with the generated feed formula is laborious and/or requires complex, expensive and vulnerable equipment. The customized animal feed compositions keep changing over time during the growth period, and may even vary from day per day. Also the various distinctive feed components have to be separately delivered to the farm by an animal feed company and have to be separately stored on the farm.

Yet another disadvantage is that the system does not take pen variation into account and is thus not able to predict the number of animals in a pen fitting in an ideal pay out weight class and thus ready for loading out.

It is noted that US-2005/0161007 and US-2017/0196203 both also disclose an animal management system in which each animal needs to get periodically weighed. For that each animal is carrying a unique transmitter. In order to obtain access to a feed the animal must stand with its front feet on a weighing device such that its weight gets weighed partially. Together with some other parameters, including feed consumption, this is sent to a computer which then calculates weight gain and growing speed. If deviations are noticed the animal is automatically marked such that a farmer gets a signal that an intervention is required.

Further it is noted that US-2018/0350010 discloses a self-learning system for animal growth rate predictions where also use is made of scale data for livestock weight as input parameter. This then leads to a nutrition feeding plan as recommendation for the livestock.

### BRIEF DESCRIPTION OF THE INVENTION

The present invention aims to overcome at least some of those disadvantages or to provide a usable alternative. In particular the present invention aims to provide a user- and animal-friendly farming method with which optimized farming instructions can be produced in an automated manner.

This aim is achieved by the method for optimizing farming of one or more groups of animals at one or more farming locations, in particular of farm animals, like pigs or poultry, according to claim 1. This method comprises the steps of assigning individual animals at a start of their growth period to one of the groups of animals (pens) and to one of the farming locations, sending animal-related information of the individual animals to a control unit in relation with to which one of the groups of animals these animals have gotten assigned to and in relation with to which one of the farming locations these animals have gotten assigned to, and feeding the groups of animals during their growth periods with amounts of respective feed compositions of specified formulae containing specific nutrient values. According to the inventive thought the method further comprises the steps of measuring feed intake amounts by each group of animals in relation to the specified formula of a respective one of the feed compositions that has been fed to them, sending the measured feed intake amounts of the groups of animals together with their specified formulae and specific nutrients to the control unit, and calculating intermediate and/or final weights for each group of animals by the control unit based upon at least their measured periodic feed and nutrient intake amounts of their specified formula, wherein the control unit generates farming instructions for each group of animals during the growth period based upon their calculated intermediate and/or final weights.

Thus according to the invention a user- and animal- friendly method is provided. The focus now is more placed on an accurate calculating of the intermediate and/or final weights of each group of animals with the actually taken in amounts of feed of a known specified formula as important input parameter. The formulae of to be given feed compositions thus no longer is something that needs to be calculated up front, but has become an input parameter for calculating said intermediate and/or final weights of each group of animals. The known formulae of the given feed compositions together with an accurate measuring of the true feed intake amounts by each group of animals, makes it possible to accurately calculate their intermediate and/or final weights at any given moment in time during their entire growth period.

The animal farming thus can be developed an important step forward towards a more and more precise, technology driven operation. Better precision in feeding, farm and health management, and climate control has become possible for growing the animals in an even more responsible and profitable way. Many of the decisions on a farm now have become much easier because the intermediate and/or final weight of the animals at any moment in time can be calculated by the control unit. Multiple reliably and accurately measured input factors now can be used for this calculation of the intermediate and/or final weights. From those calculated intermediate and/or final weight information, important feeding, climate control and farm management instructions can be generated and presented to a farm manager or even directly and automatically send as input into for example a farm management computer system.

There is no need for expensive weighing equipment or camera's and extra labour for repeated physical weighing of the animals a number of times during their growth period. Based upon the calculated intermediate and/or final weights, the control unit can already advise the farmer or a nutritionist on future feed amounts and feed compositions fitting the animals just right at that moment in time. Thus for example waste of under-feeding (not using genetic potential of the animals) or over-feeding (leading to nutrient losses, thus monetary losses and possible environmental pollution) can be efficiently prevented. The control unit can also advise on other variables like required air refreshment rates at a moment in time, or on health issues (early warning, right time and right dose of treatments), but also on stable unloading strategies.

The amounts and nutrients actually taken in cq eaten by the animals, can be measured periodically, like daily or even continuously real time, for example by means of a computerised electronic feeding system that can be provided on the farming locations. Nutrient levels of formulas can be obtained from feed formulation software, such as but not limited to Net Energy Conversion, which may comprise accurate indications of levels of digestible lysine, digestible phosphorus, etc. The input of these data then can take place as a periodic or continuous electronic data interchange between the computerised electronic feeding system and the control unit. The control unit then can calculate precise intermediate and/or final weights of the groups of animals at any moment. Estimations of animal's intermediate and/or final weights by visual observation of a farmer or from an expected or targeted growth curve is no longer necessary.

By having real time accurate weight calculations of animals, the farm management can be improved (e.g. climate control settings can be controlled to better fit the animals) and nutrient supply can be according to needs fitting the weight of the animal at any moment in time. Further it is noted that the known system can be time-saving for the farmer who no longer needs to input all kinds of crucial animal-related data via a user terminal into the system. Also the method can be much more cost-efficient in that now the right feed and feeding regime can be applied in a more accurate way.

It is noted that DE-102.12.723 discloses centrally storing historical data of meat animals like pigs of several farms in order to determine a typical common growth curve which then can be compared each time with actual data on a farm. With this a weight increase of the animals can be determined by means of direct individual weighing. It is however also mentioned in this publication that it is possible to make calculations thereof based upon quantity and quality of feed intake of the animals while taking into account their energy need. The aim hereof then is to make some of the direct individual weighing superfluous and to give an alarm signal to the farmer in case of serious detected deviations with the common growth curve. It is noted that all data of several farms here is accumulated, centrally combined and then used to have it compared with weighed/calculated weight increase, whereas according to the present invention farm specific machine learning algorithms can be used.

In a preferred embodiment according to the present invention, the measuring of the feed intake amounts by each group of animals in relation to the specified formula of a fed respective one of the feed compositions may take place by a recording of feed intake by means of a feed computer of a computerised feeding equipment. This advantageously makes it possible to make use of information from automated feeding equipment that may already be present on a farm. This information then is already available and can be imported by the control unit using electronic data interchange. It is also possible to provide weighing scales or the like for feeders, pans, bins, troughs or the like of a feeding system, such that it cannot only be accurately measured how much feed enters into those feeders, pans, bins, troughs or the like, via a transportation/delivery system or manually via a farmer, at a beginning of each feeding cycle, but also can be accurately measured how much feed is actually eaten out of those feeders, pans, bins, troughs or the like by the group of animals during each feeding cycle.

In another preferred embodiment, historic feed conversion ratio and/or feed efficiency information, such as but not limited to said Net Energy Conversion, can be obtained for previous groups of animals at the farming locations, in particular by a data recording system that is present on the farm, wherein the historic feed conversion ratio and/or feed efficiency information can be sent to the control unit, and wherein the control unit then may use the historic feed conversion ratio and/or feed efficiency information as a first correction factor during the calculating of the intermediate and/or final weights for each group of animals. This advantageously makes it possible to take a farm location-specific historic feed conversion ratio and/or feed efficiency information into account, because this may differ per farm location. With this it is possible to make use of information from data recording systems that may already be present on a farm and that can simply provide an already determined correction factor for the feed conversion ratio and/or feed efficiency information to the control unit. This information then is already available and can be imported by the control unit using electronic data interchange. It is however also possible for the control unit to also be designed to perform a calculation of this feed conversion ratio and/or feed efficiency information itself.

In another preferred embodiment, final weights of each group of animals can be measured by means of individual weighing of the animals after their growth period has ended, wherein the measured final weights of each group of animals can be sent to the control unit, and wherein the control unit then may use the measured final weights of each group of animals as a second correction factor during the calculating of the intermediate and/or final weights for new groups of animals. The final weights can be measured in various manners, like by the farmer or a transporter. Preferably, however, the measured final weights of each group of animals can be claimed from buyers (often a slaughter business) of the animals who have weighed the animals at the end of a cycle after their growth period has ended. This information then is already available and can be imported by the control unit using electronic data interchange.

In addition thereto the measured final weights of each group of animals can be obtained including a determination of variations of those measured final weights within their group of animals, wherein the control unit then may use the variations of those final weights within each group of animals for generating future animal delivery schemes for each new group of animals towards buyers against the end of their growth period. This information can easily be derived by the control unit from the imported measured final weights.

In another preferred embodiment, start weights of individual animals can be measured by means of individual weighing of the animals at a start of their growth period, wherein the measured start weights of each group of animals can be sent to the control unit, and wherein the control unit may use the measured start weights of each group of animals as a third correction factor during the calculating of the intermediate and/or final weights of each group of animals. The start weights can be measured in various manners, like by the farmer or a transporter. Preferably, however, the measured start weights of the individual animals at the start of their growth period can be claimed from a breeder who has weighed the animals prior to delivery of the animals to their assigned farm locations. Advantageously body weights at the start of the growth period have generally been weighed by the breeder just before arriving at the farming locations. This information then is already available and can be imported by the control unit using electronic data interchange.

In another preferred embodiment, the control unit may use gender or seks traits of the animals. Males, females or variants like castrated males of immune castrated animals typically have different efficiency in use of nutrients and thus gender can help to calculate growth of an animal eating a certain nutrient amount. The gender or seks traits in each group, which can be determined at a start of the growth period of the animals, can then be sent to the control unit, wherein the control unit then may use these gender or seks traits in each group assembly as a fourth correction factor during the calculating of the intermediate and/or final weights for each group of animals.

In another preferred embodiment, the specified formulae with specific nutrient values of the feed compositions can be claimed from an animal feed company that has composed and delivered the feed compositions to the farming locations. This advantageously makes it possible to make use of information from feed companies that is already known to them. Essential nutrients in feed codes delivered to the farming locations as is known to the feed company then can be extracted from feed formulation software per farm delivery. This information then can be imported by the control unit using electronic data interchange.

In another preferred embodiment environment information, like temperature and air moisture, can be obtained for each group of animals, wherein the environment information can be sent to the control unit, and wherein the control unit then may use the environment data as a fifth correction factor during the calculating of the intermediate and/or final weights for each groups of animals. This advantageously makes it possible to use the environment data for calculating a cold or a heat stress index for each group of animals. The environment data, amongst others can be extracted from an on farm climate control system or from public regional weather information. This information then can be imported by the control unit using electronic data interchange. It is known that animals with high levels of stress eat less and have a lower feed conversion and/or feed efficiency.

In another preferred embodiment the control unit may use the assigned farming location for each group of animals (typically a pen) as a sixth correction factor during the calculating of the intermediate and/or final weights for each group of animals. Specific places of the animals at their farm locations, in for example a stable, is information that can for example be known in a feeding computer of computerised feeding equipment that measures and registers the feed amounts. It is known that animals on for example outside walls of such a stable for instance grow less or need more feed nutrients to grow to a same weight as animals at other farming locations inside such a stable.

In another preferred embodiment changes in group assembly of each group of animals, in particular because of movement or loss of animals out of their group, can be obtained, wherein the changes in group assembly, can be sent to the control unit, and wherein the control unit then may use the changes in group assembly as a seventh correction factor during the calculating of the intermediate and/or final weights for each group of animals. Such animal movement/losses can easily be provided as input to the control unit. The control unit, when generating farming instructions for each group of animals during their growth period based upon their calculated intermediate and/or final weights, then can also take account of said movements/losses and in its farming instructions may include diminished feed amount instructions for the farmer or for a feed computer of a computerised feeding equipment.

Correction for each of the abovementioned factors can start using defaults, but by designing the control unit as a self-learning algorithm it can continuously improve this information.

Further preferred embodiments of the invention are stated in the dependent subclaims.

The invention also relates to a farming optimization device, comprising a control unit with a processor and a non-volatile storage memory, the processor executing a machine readable instruction stored in the non-volatile memory to perform the method according to the invention, and the invention also relates to a non-volatile storage medium, storing a machine readable instruction to perform the method according to the invention. The control unit can work local on farm, remote at for instance an office location or in a computing cloud.

### DETAILED DESCRIPTION OF THE DRAWINGS

The invention shall be explained in more detail below with reference to the accompanying drawing in which:

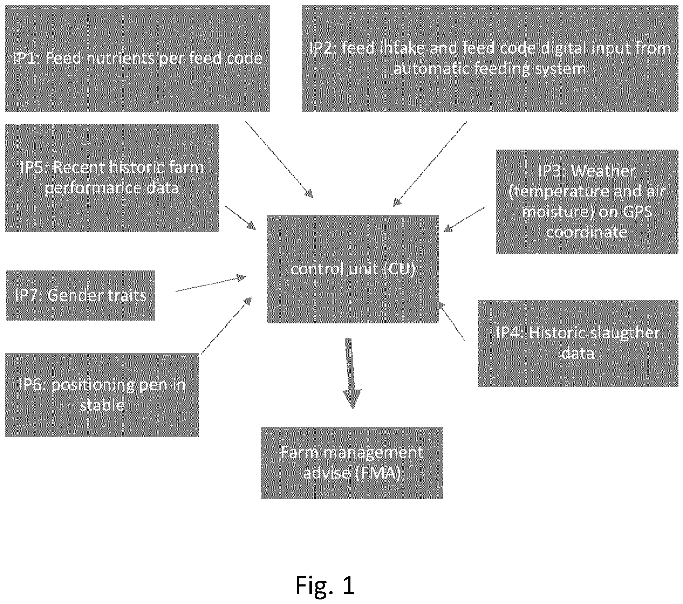

- Fig. 1 shows a block diagram of a preferred embodiment of the method steps according to the present invention.

In fig. 1 the control unit CU is placed in the center of the block diagram. This control unit CU is designed to receive a number of animal-related input parameters.

A first input parameter (IP1) is feed nutrients per feed code. By having a nutritionist on farm or a feed company give each delivered particular feed composition its own unique feed code that stands for its specified formulae and specific nutrient values, the control unit can easily keep track of what nutrient values each group of animals is going to be fed with during subsequent feeding cycles.

A second input parameter (IP2) is feed intake of a particular feed code. By having an automatic feeding equipment measure how much feed of a particular code it delivers to each group of animals (e.g. a pen or a compartment), the control unit can easily keep track of how many nutrients are going to be taken in by that group of animals (assuming that they are going to eat everything that is delivered to them during a feeding cycle). The control unit then can use this for periodic calculation of intermediate and/or final weights of the animals, which for example can be done after each feeding cycle.

A third input parameter (IP3) is weather on GPS coordinate, and/or actual temperature and air moisture. By having the control unit connect to a local weather forecast and/or a climate control system that is provided for the farming locations and that is designed to measure real-time local environment information like temperature and air moisture, the control unit can easily keep track of which actual conditions occur or are going to occur for the animals, and each time use this as an actual situation dependent correction factor when calculating the intermediate and/or end animal weights.

A fourth input parameter (IP4) is historic slaughter data. By having the control unit connect to a slaughter business who each time weighs the animals coming from the farm locations, the control unit can easily take this into account for determination of weight variation within each future group in dependence on their assigned specific farming location.

A fifth input parameter (IP5) is recent historic farm performance data. By having the control unit connect to a data recording system that is present on a farm and that is designed to determine a correction factor for the feed conversion ratio and/or feed efficiency information, the control unit can each time use this as a farm location-specific correction factor when calculating the intermediate and/or end animal weights. With this it is noted that the historic slaughter data then can be used by the control unit for fine-tuning or in the alternative even for determination of those farm location-specific feed conversion ratio and/or feed efficiency information for future groups.

A sixth input parameter (IP6) is positioning pen in stable. By having the control unit keep track of which animals are assigned to which groups and where in the stable these groups are located, the control unit can each time use this as an actual location dependent correction factor when calculating the intermediate and/or end animal weights.

A seventh input parameter (IP7) is gender/seks of the animal. Gender/seks gives an inherited difference in nutrient efficiency so can help determine what gain results from a certain nutrient intake.

According to the invention the control unit is designed to generate all kinds of farming instructions cq farm management advise (FMA) to all kinds of equipment and systems on and outside the farming locations. For example it can give group specific feeding instructions to the automatic feeding equipment for feeding a particular group with a lesser or higher amount of a specific feed composition. It can also give instructions to a farmer about when and how many animals of a specific group are ready to be sold and delivered to the slaughter business. It then can even give a transporter and slaughter business an instruction on when and how many animals are going to come their way, and a breeder on when and how many new animals are desired. Also it can give instructions to the climate control system to cool or heat specific ones of the farming locations and to what extent. Furthermore it can give instructions to a farmer that a health issue might be the case in one of the groups, for example because the measured feed intake amount for that group is lower than expected.

The invention shall be described with a non-limitative example of a calculation of the intermediate and/or final weights in a group GR that can be made by the control unit.

Young pigs arrived on a farm at 25 kg bodyweight on 1-1-2019.

On 1-2-2019 one pig in group GR has been taken out to a hospital group.

On 1-4-2019 the group GR has eaten XX kg of Phase 1 feed, XX kg of phase 2 feed plus XX kg of phase 3 feed.

Phase 1 feed has XX kcal/kg Net Energy (NE) and XX gram/kg ileal digestible (ID) lysine. Phase 2 feed has XX kcal/kg NE and XX gram/kg ID lysine. Phase 3 feed has XX kcal/kg NE and XX gram/kg ID lysine.

So the pigs in this group GR have in total eaten in that period XX kcal NE and XX gram ID lysine.

In theory the pigs in this group GR have eaten nutrients for an average grow of XX kg, thus a total group intermediate weight at that moment can be calculated.

On this farm the feed or Net Energy conversion ratio (FCR) is XX% which is better than standard, so the pigs have grown XX% more than standard.

Pigs in this particular group GR however are on a less favourable spot in the stable which leads to feed inefficiency XX% so the pigs are XX% lighter by this factor.

In this period the weather was cold and the temperature in the stable was 1 °C below thermo neutral so the pigs needed XX% of NE for body temperature correction instead of gain.
The calculated intermediate weight has to be corrected for that with XX%. The gender/seks of the animals in the group GR are entire males leading to XX% better nutrient utilisation resulting in XX% more weight from same nutrient intake. Therefore, the total group's intermediate weight variation at that moment is now known. To predict a variation in intermediate weights for the pigs in that group GR, feedback information of recent months delivery of pigs from the farm is extracted by electronic data interchange from a slaughter business. This feedback information shows that variation on this farm can be defined with a Standard Deviation (STD) of XX. This STD helps to predict what number of animals is ready to leave the group GR within an ideal final weight window of a buyer of the pigs (and thus an ideal pay out). The farmer the will receive instructions from the control unit to take the XX heaviest pigs from this specific group GR.

A same methodology can be based to find an ideal moment to switch a group from phase 2 feed to phase 3 feed. The automatic feeding equipment is for instance designed to do this at 70 kg bodyweight. The system according to the invention, advantageously is able to signal per group GR the exact right moment that the pigs have come at their target weight and send the farmer a notification or automatically change to a feed of another code in the automated feeding equipment.

If desired the control unit can have a reference growing curve as is to be expected for this farm and signal when there are groups that deviate from that and warn the farmer.

Besides the shown and described embodiments, numerous variants are possible. For example not all mentioned input parameters and/or correction factors need to be used by the control unit. Depending on the circumstances, including types of animals, aimed goals to be achieved, type of farm and type of feeding system and scheme, specific combinations of the input parameters and correction factors can be used for optimization of the farming of the animals.

Thus according to the invention the method and system use all kinds of animal-related input parameters, of which it is proven that they influence/predict growth of animals. Using all those input parameters by the control unit enables accurate calculation of intermediate and/or final weights of animals ate any moment in time such that important farming instructions can be based upon those calculated animal weights. In the end the following results can be made available:
- Animal delivery advise: how many animals from which pen are ready (at the ideal weight and body composition) to be sold;
- Feed schedule adjustment advise based on real time pen animal weights; and
- Automatic feed adjustment advise based on real time pen animal weights using machine learning algorithms.

For all of this real time intake data collection from amongst others the automatic feeding system can be used. This includes real feed intake that can be collected real time/daily and that can be real time connected to nutrient data of the exactly fed feed which can be connected with delivery data from SAP and composition data from the formulation software (which may give the actual nutrient values of feed based upon actual nutrients of individual ingredients/components/base materials at the time that those are produced). The machine learning algorithms can be per farm, such that each farm gets to have its own set of automatically improving algorithms. Data from for example a slaughter can automatically be collected for refinement of the own algorithms. Furthermore, use can be made by the self-learning algorithms of the farmer's own technical bookkeeping/accounting. The farmer can thus be advised of optimal delivery moments and number of animals per pen. Also the farmer can thus be optimally advised over switching moments in types or compositions of feed. This in contrast to state of the art solutions where more or less fixated nutrition plans and lots of other pre-determined or pre-scheduled data are used, instead of the now foreseen real time data collection.

## Claims

1. Method for optimizing farming of one or more groups of animals at one or more farming locations, in particular of farm animals, like pigs or poultry, comprising the steps of:
- assigning individual animals at a start of their growth period to one of the groups of animals and to one of the farming locations;
- sending animal-related information of the individual animals to a control unit in relation with to which one of the groups of animals these animals have gotten assigned to and in relation with to which one of the farming locations these animals have gotten assigned to; and
- feeding the groups of animals during their growth periods with amounts of respective feed compositions of specified formulae containing specific nutrient values,
**characterized in that.**
the method further comprises the steps of:
- measuring feed intake amounts by each group of animals in relation to their specified formula of a respective one of the feed compositions that has been fed to them;
- sending the feed intake amounts of the groups of animals together with their specified formulae and specific nutrients to the control unit; and
- calculating intermediate and/or final weights for each group of animals by the control unit based upon at least their measured periodic feed and nutrient intake amounts of their specified formula,
wherein the control unit generates farming instructions for each group of animals during the growth period based upon their calculated intermediate and/or final weights.

2. Method according to claim 1, wherein the measuring of the feed intake amounts by each group of animals in relation to the specified formula of a fed respective one of the feed compositions takes place by a recording by means of computerised feeding equipment.

3. Method according to claim 1 or 2, wherein historic feed conversion ratio (FCR) and/or feed efficiency (FE) information is obtained for previous groups of animals at the farming locations, in particular by a data recording system that is present on the farm,
wherein the historic feed conversion ratio (FCR) and/or feed efficiency (FE) information is sent to the control unit, and
wherein the control unit uses the historic feed conversion ratio (FCR) and/or feed efficiency (FE) information as a first correction factor during the calculating of the intermediate and/or final weights for each group of animals.

4. Method according to one of the preceding claims, wherein final weights of each group of animals are measured by means of individual weighing of the animals after their growth period has ended,
wherein the measured final weights of each group of animals are sent to the control unit, and
wherein the control unit uses the measured final weights of each group of animals as a second correction factor during the calculating of the intermediate and/or final weights for new groups of animals.

5. Method according to claim 4, wherein the measured final weights of each group of animals are claimed from buyers of the animals who have weighed the animals after their growth period has ended.

6. Method according to claim 4 or 5, wherein the measured final weights of each group of animals are obtained including a determination of variations of those measured final weights within their group of animals,
wherein the control unit uses the variations of those final weights within each group of animals for generating future animal delivery schemes for each new group of animals towards buyers against the end of their growth period.

7. Method according to one of the preceding claims, wherein start weights of individual animals are measured by means of individual weighing of the animals at a start of their growth period,
wherein the measured start weights of each group of animals are sent to the control unit, and
wherein the control unit uses the measured start weights of each group of animals as a third correction factor during the calculating of the intermediate and/or final weights of each group of animals.

8. Method according to claim 7, wherein the start weights of the individual animals at the start of their growth period are claimed from a breeder who has weighed the animals prior to delivery of the animals to their assigned farm locations.

9. Method according to one of the preceding claims, wherein gender or seks traits of individual animals are determined at a start of their growth period,
wherein the determined gender or seks traits of each group of animals are sent to the control unit, and
wherein the control unit uses the determined gender or seks traits of each group of animals as a fourth correction factor during the calculating of the intermediate and/or final weights of each group of animals.

10. Method according to one of the preceding claims, wherein the specified formulae with specific nutrient values of the feed compositions are claimed from an animal feed company that has composed and delivered the feed compositions to the farming locations.

11. Method according to one of the preceding claims, wherein environment information, like temperature and air moisture, is obtained for each group of animals,
wherein the environment information is sent to the control unit, and
wherein the control unit uses the environment data as a fifth correction factor during the calculating of the intermediate and/or final weights for each groups of animals.

12. Method according to one of the preceding claims, wherein the control unit uses the assigned farming location for each group of animals as a sixth correction factor during the calculating of the intermediate and/or final weights for each group of animals.

13. Method according to one of the preceding claims, wherein changes in group assembly of each group of animals, in particular because of movement or loss of animals out of their group, are obtained,
wherein the changes in group assembly, are sent to the control unit, and
wherein the control unit uses the changes in group assembly as a seventh correction factor during the calculating of the intermediate and/or final weights for each group of animals.

14. Farming optimization device, comprising a processor and a non-volatile storage memory, the processor executing a machine readable instruction stored in the non-volatile memory to perform the method according to one of the preceding claims 1-13.

15. Non-volatile storage medium, storing a machine readable instruction to perform the method according to one of the preceding claims 1-13.
